**Europäisches Patentamt**

**European Patent Office**

**Office européen des brevets**

(19)

(11) Publication number : **0 364 423 B1**

# (12) EUROPEAN PATENT SPECIFICATION

(45) Date of publication of patent specification :
**30.12.92 Bulletin 92/53**

(51) Int. Cl.⁵ : **C02F 1/52**

(21) Application number : **89850334.7**

(22) Date of filing : **09.10.89**

(54) **A method for purifying contaminated aqueous solutions.**

(30) Priority : **11.10.88 SE 8803597**

(43) Date of publication of application :
**18.04.90 Bulletin 90/16**

(45) Publication of the grant of the patent :
**30.12.92 Bulletin 92/53**

(84) Designated Contracting States :
**BE DE ES FR GB IT LU NL**

(56) References cited :
**WO-A-81/02569**
**DE-A- 3 245 314**
**DE-A- 3 611 448**

(56) References cited :
**US-A- 4 566 975**
**Patent Abstracts of Japan, vol. 8, no. 118
(C-226), abstract of JP 59-29082 publ. 1984-
02-16**

(73) Proprietor : **BOLIDEN CONTECH AB**
**P.O. Box 21024**
**S-100 31 Stockholm (SE)**

(72) Inventor : **Allgulin, Torkel**
**Hövdingegatan 3C**
**S-253 67 Helsingborg (SE)**

(74) Representative : **Lundin, Björn-Eric**
**Trelleborg AB Patents and Trade Marks Box
21024**
**S-100 31 Stockholm (SE)**

EP 0 364 423 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to a method for purifying contaminated aqueous solutions, by precipitation in two stages with the use of known precipitation reagents, in accordance with the preamble of claim 1.

It is known to purify aqueous solutions from inorganic contaminants by precipitation with precipitation agents in an acid or alkaline environment. For instance, our earlier US patent US-A-4 503 017 describes the precipitation of heavy metals, such as As, Sb, Hg and Sn, with sulphide ions in an acid environment. In order to purify the solution satisfactorily, primarily with respect to As, it is necessary to effect precipitation in two stages, for instance at pH 0.1-2.5 and pH 4.0-4.3 respectively. Despite this, purification was found to be incomplete with respect to certain elements, which precipitate as sulphides at an approximately neutral pH.

It is also known that arsenic and other heavy metals can be isolated from aqueous solutions in more alkaline environments, by precipitating with the system $Me^{n+}/Me(OH)_n$, i.e. a combination of free ions and hydroxide of the element Me. In an alkaline environment, hydroxide is the predominant precipitating agent, although the system can also be used to precipitate heavy metals in neutral or even slightly acid environments, provided that sufficient oxidizing conditions prevail, wherewith $Me^{3+}$-ions take part in the precipitation process to form complex compounds between the heavy metals and $Me^{3+}$-ions, for instance such complex compounds as iron(III)-arsenite-arsenates. This precipitation process can be effected at a pH as low as 5-6. Suitable elements for use in the system are primarily Fe, Al and Ca, since these elements do not present serious environmental problems, although it is possible, in certain cases, to use the elements Mn, Zn and Cr. However, it has been found necessary to add precipitation reagents to the precipitation system in quantities which will ensure that a substantial stoichiometric excess of precipitating ions are obtained. The reason for this is thought to be because part of the precipitating, additive ions will be present in the solution in a complex form and therewith remain inactive. This formation of complex compounds can take place, for instance, in respect of many of the ions concerned, for instance Al and Fe, when sulphur dioxide is present in the aqueous solution, resulting in the formation of sulphur/oxy-compounds. It has also been difficult to attain the low residual contents of, e.g., arsenic in the purified solution now demanded for environmental reasons in many countries, before the solutions can be dumped, even when precipitation reagents are added in excess quantities. The lowest residual contents of arsenic which can be achieved in practice lies in the order of magnitude of 0.2-0.3 g/l. Attempts have also been made to effect the precipitation process in two stages. These attempts have not succeeded in reducing the residual contaminant content of the solutions to any appreciable extent, despite the use of a substantial total excess of precipitation reagent.

A combination of such acid and alkaline precipitation processes is disclosed in DE-A-3 611 448, i.e. first a sulphide precipitation in a strong acidic environment for precipitation of Pb and Cu and then a hydroxide precipitation of the remaining last traces of Pb and Cu and also Fe content. Two separate metal-containing precipitates are removed as such from the process and, thus, problems with the practical handling of the removal will occur.

US-A-4 566 975 describes a method earlier proposed by Boliden, which eliminates many of the problems associated with such precipitation processes at pH >4-5. When practising the method proposed in US-A-4 566 975, impurities such as As, P and heavy metals are precipitated from aqueous solutions in two or more stages, and a large part of the precipitation reagent is supplied in the second stage, and optionally also in following stages. This results in the formation of a contaminant-containing precipitate in the aqueous solution, which is separated substantially completely. The fact that a minor part of the aqueous solution may accompany the precipitate is not of critical significance, the main thing being that the remaining part of the aqueous solution is substantially free from the precipitate. That part of the aqueous solution which is free of precipitate can be dumped, whereas the precipitate together with any minor part of the solution accompanying said precipitate can be cycled back to the system. This recycling process can be effected in different ways, the only essential factor in this respect being that the precipitate is present in the first precipitation stage. For instance, the precipitate can be recycled to the impure aqueous solution intended for the first precipitation stage, subsequent to being alkalised if necessary, or may also be recycled back to the first precipitation stage directly. The precipitate formed in the aqueous solution subsequent to carrying out the first precipitation stage is separated in the form of sludge, prior to passing the aqueous solution to the second precipitation stage.

This method is totally satisfactory when the primary purpose is to obtain a solution whose purity can be accepted from an environmental aspect.

In certain instances, however, it may be desirable to isolate or recover certain contaminants from the solution in a form which will enable them to be further processed and for winning any metal values which may be present.

It has now surprisingly been found possible to propose a method of combining a precipitation process effected in an acid environment using sulphide ions with a precipitation process effected in a more alkaline environment, in a manner which will produce synergistic effects in the aforesaid direction. For instance, solutions can be purified to the same fully satisfactory extent as that achieved by the precipitation process according to our earlier patented method using the system $Me^{n+}/Me(OH)_n$, while at the same time obtaining certain contaminants in a form which enables valuable substances to be recovered.

Accordingly, the method proposed in accordance with the invention comprising the process stages set forth in the following claims.

Thus, precipitation is effected in at least one acid sulphide precipitation stage and one more-alkaline metal-ion-hydroxide-precipitation stage. The precipitate resulting from the more alkaline stages is returned to the purification system, either to the contaminated aqueous solutions which are intended to be passed through the system, or to at least one of the acid precipitation stages. This enables the recycled precipitate to be dissolved in the acid environment.

All of the elements accompanying the recycled precipitate and capable of being precipitated as sulphides in an acid environment will be precipitated substantially completely. Any minor quantities which remain in solution will be absorbed by the precipitate in subsequent, more alkaline stages and cycled back to the acid precipitation stages. The precipitate formed during precipitation in a more alkaline environment will, in the greater part, circulate in the system between the precipitation stages and carry therewith any residual quantities of, e.g., As, Hg and heavy metals which were not precipitated as sulphides in the acid environment stage of the process.

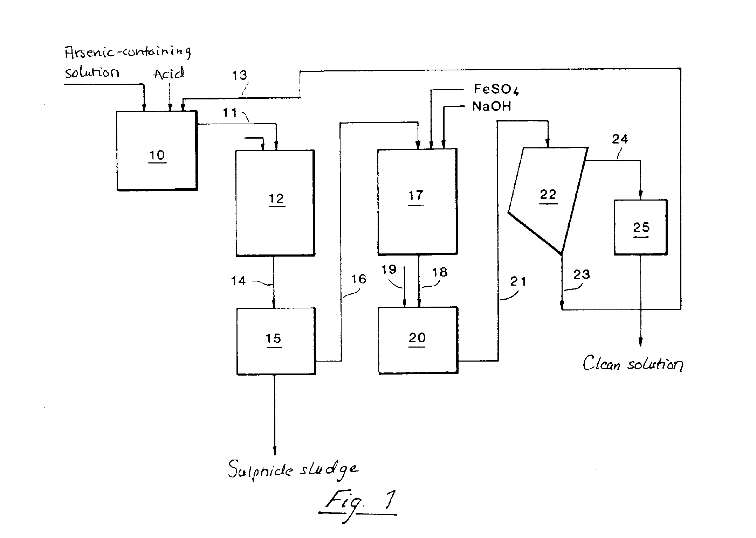

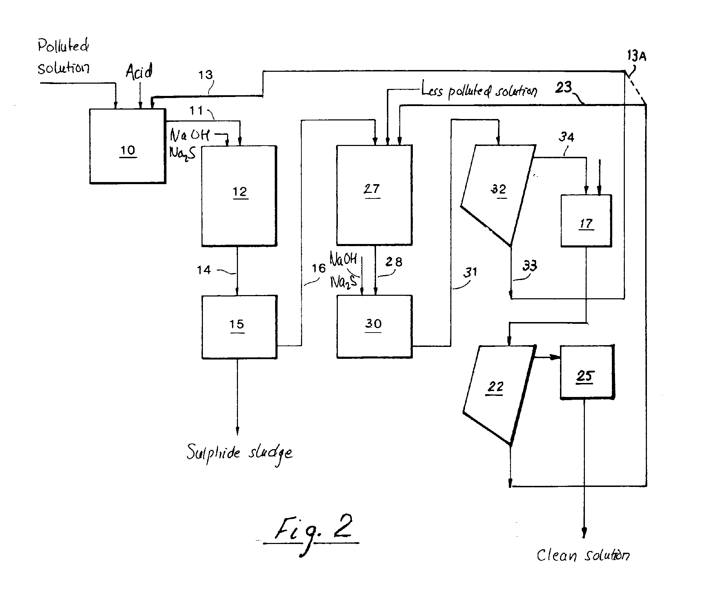

The invention will now be described in more detail with reference to the accompanying drawing, in which Figure 1 and Figure 2 are respective block diagrams of two preferred embodiments of the invention particularly useful for purifying process water solutions containing As, Hg and heavy metals.

The system illustrated in Figure 1 comprises a mixing tank 10 to which an arsenic-containing solution is introduced. Acid and return sludge are also fed to the tank 10, through a conduit 13. The solution in the tank 10 is adjusted to a pH of 1-2, optionally by adding acid to the tank. The acid solution is pumped through a conduit 11 to a first precipitation tank 12. Hydrogen sulphide ($Na_2S$) is added to the solution, and the pH of the solution is adjusted to 3-4, by adding alkali (NaOH). The hydrogen sulphide is added in a quantity which results in substantially complete precipitation of As, Hg and heavy metals as sulphides. The solution and precipitate is removed from the tank 12, through a conduit 14, and passed to a separation plant 15, preferably in the form of a filter. At least an essential part of the sulphide precipitate present is separated in the separation plant 15. As will be understood, the separation effected in this stage need not necessarily be a complete separation. The separated sulphide sludge is removed and passed to a process stage for further processing with respect to arsenic and possible valuable heavy metals.

The solution freed from the major part of the metal sulphide sludge is pumped from the separation plant 15 to a second precipitation tank 17. Alkali, exemplified as NaOH in the illustrated embodiment, is introduced to the tank 17, together with an optional precipitation reagent, in the illustrated case $FeSO_4$. When steady-state conditions prevail, only a minor quantity of precipitation reagent need be added, this amount corresponding to the amount lost in the process, since the major part of the precipitation elements circulate in the system. This has been indicated by the brackets around $FeSO_4$. The amount in which the alkali is added is adapted so that the pH of the solution will lie in the range of 7-9, subsequent to adding $FeSO_4$. This enables contaminant elements to be precipitated to a residual content of less than 1 mg/l in the solution. The major part of the resultant precipitate will often consist of relatively voluminous iron hydroxide together with $AsO_2^-$ adsorbed thereon, and can generally be designated as "ferro- and ferri-arsenites and -arsenates". During this precipitation process, any mercury and other heavy metals which failed to precipitate in the acid stage will be precipitated in a similar manner together with the arsenic and iron, to leave very small residual quantities. It has been found possible when using iron(II)-ions as a precipitation reagent to precipitate mercury down to residual contents as low as below about 3 mg/l, which value is obtained when using present day known methods. Subsequent to complete precipitation, the solution together with the precipitate present is passed through a conduit 18 to a flocculating tank 20, to which flocculating agents are preferably also introduced, through a delivery conduit 19. The thus treated solution is pumped from the flocculating tank 20, through a conduit 21, to a lamella separator 22. The flocculated precipitate is separated from the solution and removed in the form of sludge from the bottom of said lamella separator 22, as indicated by the presence of the conduit 23, whereas cleansed solution is removed through an overflow conduit 24 and passed to a cloth filter 25, in which additional sludge is removed. The cleansed and filtered solution is passed from the cloth filter 25 to a dumping site.

The bottom sludge is taken from the separator 22 through the conduit 23 and returned to the mixing tank 10, through the conduit 13. Alternatively, the sludge can be passed to the arsenate solution and mixed therewith, prior to being fed to the mixing tank 10. The hydroxide sludge and contaminants accompanying said sludge are rapidly dissolved in the tank 10, and accompany the solution to the precipitation tank 12.

Figure 2 illustrates an embodiment in which sulphide precipitation is effected in two stages. Contaminant solution is passed to the mixing tank 10, from where it is passed through the conduit 11 to the precipitation tank 12, and through the conduit 14 to the filter 15, where sulphide sludge is removed. Up to this stage, the process carried out in accordance with Figure 2 coincides with the embodiment illustrated in Figure 1. The solution separated in the filter 15 is passed through the conduit 16 to a second mixing tank 27, together with externally supplied contaminated solution or an acid which is contaminated to a less extent than the solution or acid supplied to the tank 10. Furthermore, sludge obtained in the lamella separator 22 is passed to the tank 27, through the conduit 23. The solution in the mixing tank 27 is adjusted to a pH of about 2, so as to ensure dissolution of the recycled sludge. The acid solution is pumped through a conduit 28 to a second precipitation tank 30. Hydrogen sulphide, $Na_2S$, and alkali (NaOH) are added, so as to adjust the pH of the solution to about 4. Solution and resultant precipitate are removed from the tank 30 and passed through a conduit 31 to a first lamella separator 32. The precipitate is separated in the lamella separator, subsequent to optional flocculation, and is removed in the form of a sludge from the bottom of the separator, through a conduit 33, whereas cleansed solution is removed through an overflow conduit 34 and returned for alkaline precipitation in the system comprising the precipitation tank 17, the lamella separator 22 and the filter 25. Purified final solution is removed from the filter 25, whereas hydroxide sludge separated in the separator 22 is passed through the conduit 23 back to the second mixing tank 27. Optionally, part of the precipitate can be passed to the first mixing tank 10, as indicated with a broken line 13A connecting the conduit 23 and the conduit 13. Among those contaminated aqueous solutions which can be purified beneficially by means of the method according to the present application can be mentioned acid condensates which contain As, Hg, Se, Cd and other heavy metals and possibly also solid contaminants formed when cooling roaster gases in accordance with the method for cleansing roaster gases described in US-A-4 138 231 (Boliden Aktiebolag).

The invention can be used advantageously for purifying process water solutions deriving from chemical and metallurgical industries. The invention can be applied with particular advantage to solutions which contain such contaminants as As, Hg and other heavy metals particularly regulated from the aspect of environmental control and protection.

## Claims

1. A method for purifying contaminated aqueous solutions containing at least one of the group arsenic, phosphorus and heavy metals in which the precipitation process is carried out in at least two stages, so that precipitation is carried out in at least the first stage as a sulphide precipitation process in an acid environment and in at least one following stage in a more alkaline environment with the aid of Fe, Al, Mn, Zn, Cr or Ca in the form of ions and or hydroxide, that precipitatable contaminants in the ingoing aqueous solution are recovered in the form of precipitate obtained in said acid environment; and that the solution free from precipitate is removed from the last more-alkaline stage. characterized in that the precipitate present in the aqueous solution subsequent to precipitation in said more alkaline environment is separated substantially completely and recycled to one of the stages for precipitation in an acid environment.

2. A method according to claim 1, characterized in that precipitation in an acid environment is carried out at a pH of 3-4.

3. A method according to claim 1, characterized in that precipitation in the more alkaline environment is carried out at a pH of 7-9.

4. A method according to any one of claims 1-3, characterized in that the precipitate extracted from the precipitation process carried out in a more alkaline environment is recycled via the incoming aqueous solution.

5. A method according to any one of claims 1-4, characterized in that an aqueous solution which is less contaminated than the aqueous solution fed to the first acid precipitation stage is supplied to a subsequent acid precipitation stage.

6. A method according to claim 5, characterized in that precipitate removed from the precipitation process in a more alkaline environment is recycled to said following acid precipitation stage.

7. A method according to claim 6, characterized in that at least a part of the precipitate is recycled to the first acid stage.

8. A method according to any one of claims 2-7, characterized in that precipitation in an acid environment is effected through the addition of sodium sulphide at a pH of 3-4.

## Patentansprüche

1. Verfahren zur Reinigung kontaminierter wäßriger Lösungen, die wenigstens ein Element aus der Gruppe Arsen, Phosphor und der Schwermetalle enthalten, wobei die Ausfällung in wenigstens zwei Stufen derart durchgeführt wird, daß die Ausfällung in wenigstens der ersten Stufe als ein Sulfidausfällungsverfahren in einer sauren Umgebung und in wenigstens einer folgenden Stufe in einer stärker alkalischen Umgebung mit Hilfe von Fe, Al, Mn, Zn, Cr oder Ca in der Form von Ionen und/oder Hydroxid durchgeführt wird, daß ausfällbare Verunreinigungen in der eintretenden wäßrigen Lösung in der Form eines in der sauren Umgebung erhaltenen Niederschlages gewonnen werden und daß die vom Niederschlag befreite Lösung aus der letzten stärker alkalischen Stufe entfernt wird, **dadurch gekennzeichnet**, daß der in der wäßrigen Lösung nach der Ausfällung in der stärker alkalischen Umgebung vorhandene Niederschlag im wesentlichen vollständig abgetrennt und zu einer der Stufen zur Ausfällung in einer sauren Umgebung zurückgeführt wird.

2. Verfahren nach Anspruch 1, **dadurch gekennzeichnet**, daß die Ausfällung in einer sauren Umgebung bei einem pH-Wert von 3 bis 4 durchgeführt wird.

3. Verfahren nach Anspruch 1, dadurch gekennzeichnet, daß die Ausfällung in der stärker alkalischen Umgebung bei einem pH-Wert von 7 bis 9 durchgeführt wird.

4. Verfahren nach einem der Anspruche 1 bis 3, **dadurch gekennzeichnet**, daß der aus der Ausfällung in einer stärker alkalischen Umgebung entfernte Niederschlag über die eintretende wäßrige Lösung zurückgeführt wird.

5. Verfahren nach einem der Anspruche 1 bis 4, **dadurch gekennzeichnet**, daß eine wäßrige Lösung, die weniger als die der ersten sauren Ausfällungsstufe zugeführte wäßrige Lösung kontaminiert ist, einer anschließenden sauren Ausfällungsstufe zugeführt wird.

6. Verfahren nach Anspruch 5, **dadurch gekennzeichnet**, daß aus der Ausfällung in einer stärker alkalischen Umgebung entfernter Niederschlag zu der nachfolgenden sauren Ausfällungsstufe zurückgeführt wird.

7. Verfahren nach Anspruch 6, **dadurch gekennzeichnet**, daß wenigstens ein Teil des Niederschlages zu der ersten sauren Stufe zurückgeführt wird.

8. Verfahren nach einem der Ansprüche 2 bis 7, **dadurch gekennzeichnet**, daß die Ausfällung in einer sauren Umgebung durch die Zugabe von Natriumsulfid bei einem pH-Wert von 3 bis 4 bewirkt wird.

## Revendications

1. Procédé de purification de solutions aqueuses contaminées, contenant au moins l'un des éléments du groupe comportant l'arsenic, le phosphore et les métaux lourds, dans lequel le processus de purification est mis en oeuvre en au moins deux phases, de manière qu'une précipitation soit réalisée dans au moins la première phase sous forme d'un procédé de précipitation de sulfures dans un environnement acide, et dans au moins une phase suivante dans un environnement plus alcalin, à l'aide de Fe, Al, Mn, Zn, Cr ou Ca sous la forme d'ions et/ou d'hydroxyde, les produits de contamination pouvant précipiter, se trouvant dans la solution aqueuse entrante, étant récupérés sous la forme d'un précipité obtenu dans l'environnement acide précité, et la solution ne comportant pas de précipité étant enlevée de la dernière phase plus alcaline, ce procédé étant caractérisé en ce que le précipité présent dans la solution aqueuse après la précipitation dans l'environnement plus alcalin précité est séparé pratiquement totalement et recyclé à l'une des phases de précipitation dans un environnement acide.

2. Procédé suivant la revendication 1, caractérisé en ce que la précipitation dans un environnement acide est mise en oeuvre à un pH de 3-4.

3. Procédé suivant la revendication 1, caractérisé en ce que la précipitation se faisant dans l'environnement plus alcalin est mise en oeuvre à un pH de 7-9.

4. Procédé suivant l'une quelconque des revendications 1 à 3, caractérisé en ce que le précipité extrait du procédé de précipitation mis en oeuvre dans un environnement plus alcalin est recyclé via la solution aqueuse entrante.

5. Procédé suivant l'une quelconque des revendications 1 à 4, caractérisé en ce qu'une solution aqueuse qui est moins contaminée que la solution aqueuse alimentée à la première phase acide de précipitation est alimentée à une phase acide ultérieure de précipitation.

6. Procédé suivant la revendication 5, caractérisé en ce que le précipité enlevé du procédé de précipitation dans un environnement plus alcalin est recyclé à la phase acide suivante précitée de précipitation.

7. Procédé suivant la revendication 6, caractérisé en ce qu'au moins une partie du précipité est recyclée à la première phase acide.

8. Procédé suivant l'une quelconque des revendications 2 à 7, caractérisé en ce que la précipitation dans un environnement acide est réalisée par l'addition de sulfure de sodium à un pH de 3-4.

Arsenic-containing
solution    Acid        13

10          11          FeSO₄
                        NaOH
12          17                  24
                        22      25
14      16      19      18  21      23
15              20                  Clean solution

Sulphide sludge

Fig. 1

Fig. 2